# EUROPÄISCHE PATENTANMELDUNG

(11) **EP 2 876 376 A2**
(43) Veröffentlichungstag der Anmeldung: **27.05.2015**
(21) Anmeldenummer: 14003087.5
(22) Anmeldetag: 08.09.2014
(51) Int. Cl.: F24D 17/00, E03B 7/07, F24D 19/10, G01F 1/00

(54) **Anordnung und Warmwasserzirkulationstrenner für ein Warmwasserversorgungssystem**

(30) Priorität: 07.09.2013 DE 102013015014
(71) Anmelder: Haberland, Gerd, 09243 Niederfrohna (DE); WILO SE, 44263 Dortmund (DE)
(72) Erfinder: Haberland, Gerd, 09243 Niederfrohna (DE); Strelow, Günter, 44801 Bochum (DE); Schmied, Stephan, 44319 Dortmund (DE)
(74) Vertreter: Cohausz Hannig Borkowski Wißgott

(57) **Zusammenfassung**

Die Erfindung betrifft eine Anordnung (1) zur Reduzierung der Verkeimung vor einer Zapfstelle (5) eines Warmwasserversorgungssystems umfassend einen primären Warmwasserkreislauf (3) zur Förderung eines aufgeheizten Wasserstroms zu wenigstens einer Zapfstelle (5) zur Entnahme von Warmwasser, in dem eine Heizquelle (6) zur Bereitstellung des aufgeheizten Wasserstroms vorhanden ist, einen sekundären Warmwasserkreislauf (4) zur Förderung eines aufzuheizenden Wasserstroms, der die zumindest eine Zapfstelle (5) aufweist, eine Vorrichtung (2), die den primären Warmwasserkreislauf (3) und den sekundären Warmwasserkreislauf (4) derart thermisch koppelt, dass thermische Energie vom aufgeheizten Wasserstrom auf den aufzuheizenden Wasserstrom übertragen wird, und eine Messeinrichtung (7) zur Messung der über die Zapfstelle (5) entnommenen Wassermenge, die in einer den primären Warmwasserkreislauf (3) mit dem sekundären Warmwasserkreislauf (4) verbindenden Verbindungsleitung (8) angeordnet ist.

## Beschreibung

Die Erfindung betrifft eine Anordnung zur Reduzierung der Verkeimung des Warmwassers vor einer Zapfstelle eines Warmwasserversorgungssystems, wobei die Anordnung einen primären Warmwasserkreislauf zur Förderung eines aufgeheizten Wasserstroms zu wenigstens einer Zapfstelle zur Entnahme von Warmwasser umfasst, in dem eine Heizquelle zur Bereitstellung des aufgeheizten Wasserstroms vorhanden ist. Des Weiteren betrifft die Erfindung einen Warmwasserzirkulationstrenner.

Das Problem der Verkeimung, d.h. der Bakterienbildung wie beispielsweise Legionellen, die bei fehlender Wasserentnahme über einen längeren Zeitraum in sogenanntem Stagnationswasser vor einer Zapfstelle eines Wasserversorgungssystems auftritt, ist allgemein bekannt. Dies gilt für die Kaltwasserversorgung ebenso wie für die Warmwasserversorgung. Zur deren Vermeidung ist es bekannt, das Wasser zirkulieren zu lassen. Hierzu kann ein Kreislauf verwendet werden, der bis in die Zapfstelle hineinreicht oder an den die Zapfstelle mit möglichst kurzer Anschlussleitung angeschlossen ist. Somit kann Stagnationswasser entweder ganz vermieden oder zumindest auf das Volumen in der Anschlussleitung reduziert werden. Beispiele solcher Systeme sind z.B. in den Patentanmeldungen WO 2006/037868 A1 und DE 42 35 038 A1 beschrieben.

Ein Nachteil dieser Versorgungsstruktur ist der Entfall der Möglichkeit, die verbrauchte Wassermenge zu messen, da ein Volumenstrommessgerät vor der Zapfstelle innerhalb der Zirkulationsleitung permanent das zirkulierende Wasser jedoch nicht den tatsächlichen Wasserverbrauch messen würde. Aus diesem Grunde wird das Messgerät in der Regel in der Verbindungleitung zwischen Kreislauf und Zapfstelle angeordnet. Hierdurch wird zwar nur die verbrauchte Wassermenge gemessen, jedoch liegt in diesem Fall Stagnationswasser in der Verbindungsleitung vor, das für Verkeimung anfällig ist.

Eine Möglichkeit, das Stagnationswaser zu vermeiden, besteht darin, zeitgesteuerte Abscheideventile zu verwenden, die das Stagnationswasser in regelmäßigen Zeitabständen verwerfen, wie dies beispielsweise in dem Patent DE 10 2006 017 807 B4 beschrieben ist. Dies ist jedoch nicht ökonomisch, weil hierdurch Wasser ungenutzt zum Abwasser gelangt und auch das abgeschiedene Wasser von der Messeinrichtung gezählt wird. Ein verbessertes Abscheideverfahren ist aus der Patentanmeldung DE 10 2008 047 938 A1 bekannt, bei dem das zu verwerfende Wasser in den Spülkasten einer Toilette zur weiteren Verwendung entlassen wird. Gleichwohl verbleibt hier das Problem, dass die Messeinrichtung das abgelassene Wasser ebenfalls misst und somit nicht den tatsächlichen Wasserverbrauch erfassen kann.

Es ist daher Aufgabe der vorliegenden Erfindung eine Anordnung und eine Vorrichtung bereitzustellen, die die genannten Nachteile überwindet und einfach in einem Warmwasserversorgungssystem installiert werden kann.

Diese Aufgabe wird durch die Anordnung mit den Merkmalen des Anspruchs 1 und die Vorrichtung mit den Merkmalen des Anspruchs 14 gelöst. Vorteilhafte Weiterbildungen sind in den jeweiligen Unteransprüchen angegeben.

Erfindungsgemäß wird eine Anordnung zur Reduzierung der Verkeimung des Warmwassers vor einer Zapfstelle eines Warmwasserversorgungssystems, beispielsweise eines häuslichen Trinkwasserversorgungssystems, vorgeschlagen, umfassend einen primären Warmwasserkreislauf zur Förderung eines aufgeheizten Wasserstroms mit einer Heizquelle zur Bereitstellung des aufgeheizten Wasserstroms, einen sekundären Warmwasserkreislauf zur Förderung eines aufzuheizenden Wasserstroms, der zumindest eine Zapfstelle zur Entnahme aufweist, eine Vorrichtung, die den primären Warmwasserkreislauf und den sekundären Warmwasserkreislauf derart thermisch koppelt, dass thermische Energie vom aufgeheizten Wasserstrom auf den aufzuheizenden Wasserstrom übertragen wird ohne dass es zu einer stofflichen Mischung der Kreisläufe kommt, und eine Messeinrichtung zur Messung der über die Zapfstelle entnommenen Wassermenge, die in einer den primären Warmwasserkreislauf mit dem sekundären Warmwasserkreislauf verbindenden Verbindungsleitung angeordnet ist.

Diese Anordnung hat den Vorteil, dass einerseits eine Zirkulation aufgeheizten Wassers bis zur Zapfstelle vorliegt, so dass die Keimbildung an der Zapfstelle minimiert wird. Andererseits erreicht die erfindungsgemäße Anordnung, dass nur die Menge des tatsächlich an der Zapfstelle entnommenen Wassers gemessen wird. Denn nur wenn die Zapfstelle geöffnet wird, fließt ein Wasserstrom vom primären Warmwasserkreislauf zum sekundären Warmwasserkreislauf. Dieser Wasserstrom fließt über die Verbindungleitung, in der die Messeinrichtung angeordnet ist. Bei geschlossener Zapfstelle fließt dagegen kein Zirkulationswasser über die Messeinrichtung. Der sekundäre Kreislauf kann bis in die Zapfstelle hineinreichen, so dass überhaupt kein Stagnationswasser mehr vorliegt.

Die genannte Vorrichtung bildet einen Wärmetauscher, der dazu dient, die Wärmeenergie des Warmwassers des primären Warmwasserkreislaufs auf den sekundären Warmwasserkreislauf zu übertragen, ohne dass es zu einer Mischung der beiden Kreisläufe kommt. Grundsätzlich kann hier ein Wärmetauscher einer beliebigen bekannten Bauart verwendet werden. Bestenfalls kann hierdurch erreicht werden, dass der aufzuheizende Wasserstrom im sekundären Warmwasserkreislauf auf die gleiche Temperatur aufgeheizt wird, wie der Wasserstrom im primären Warmwasserkreislauf, d.h. auf eine Temperatur von beispielsweise 65 - 70°C. Es können jedoch auch unterschiedliche Temperaturen in den Kreisläufen vorliegen, je nach konstruktiver Ausführung des Wärmetauschers.

Vorzugsweise ist der primäre Warmwasserkreislauf ein zentraler Warmwasserkreislauf einer Trinkwasserversorgung. Dies hat den Vorteil, dass keine zusätzliche Heizung zur Bereitstellung des aufgeheizten Wasserstroms des sekundären Warmwasserkreislaufs verwendet werden muss. Vielmehr wird die ohnehin bei jedem häuslichen Trinkwasserversorgungssystem vorhandene Heizquelle, die der Bereitstellung aufgeheizten Trinkwassers dient, beispielsweise ein Boiler oder eine kombinierte Heizung/Trinkwasser-Therme, verwendet. Es sei angemerkt, dass die Erfindung nicht auf häusliche Warmwasserversorgungssysteme beschränkt ist. Wenngleich die Verwendung der erfindungsgemäßen Anordnung in privaten Ein- und Mehrfamilienhäusern, Geschäftshäusern, öffentlichen Gebäuden wie Schulen, Kindergärten, Krankenhäusern, Altenheimen etc. eine bevorzugte Anwendung ist, ist gleichfalls eine Anwendung in sich bewegenden Wasserversorgungssystemen wie z.B. auf Kreuzfahrtschiffen oder Flugzeugen denkbar. Im Falle von Ein- und Mehrfamilienhäusern, Geschäftshäusern, öffentlichen Gebäuden wie Schulen, Kindergärten, Krankenhäusern, Altenheimen etc. besitzt der primäre Warmwasserkreislauf eine Verbindung zur kommunalen Trinkwasserversorgung, die in den Warmwasserkreislauf über eine entsprechende Übergabestelle Trinkwasser speist. Im Falle einen autarken Wasserversorgungssystems, wie es auf einem Schiff oder einem Flugzeug vorliegt, wird der primäre Warmwasserkreislauf aus einem Trinkwasserreservoir gespeist.

Die Messeinrichtung kann ein gewöhnlicher Wasserzähler sein, wie er üblicherweise von dem örtlichen Trinkwasserversorger verwendet wird. Er misst die verbrauchte Wassermenge beispielsweise in Kubikmetern.

Der sekundäre Warmwasserkreislauf kann neben der zumindest einen Zapfstelle auch eine oder mehrere weitere Zapfstellen aufweisen, über die jeweils aufgeheiztes Wasser entnommen werden kann. Diese Zapfstellen können hydraulisch in Reihe angeordnet sein, so dass strömendes Wasser zunächst die in Strömungsrichtung erste Zapfstelle und sodann die zweite und ggf. weitere Zapfstelle oder Zapfstellen durchströmt oder an diesen vorbeiströmt. Alternativ können die Zapfstellen auch parallel liegen, so dass sich das im sekundären Warmwasserkreislauf zirkulierende Wasser vor den Zapfstellen aufteilt und hinter den Zapfstellen wieder zum sekundären Warmwasserkreislauf vereinigt. Sowohl die parallele Anordnung als auch die Serienanordnung der Zapfstellen gewährleistet, dass diese stets von aufgeheiztem Wasser durchströmt werden bzw. im Falle einer kurzen Verbindungsleitung zwischen Zapfstelle und sekundärem Warmwasserkreislauf vor allen Zapfstellen aufgeheiztes Wasser zirkuliert, so dass eine Verkeimung weitgehend vermieden wird.

Gemäß einer bevorzugteren Ausführungsvariante verbindet die Verbindungsleitung den primären Warmwasserkreislauf außerhalb der Vorrichtung mit dem sekundären Warmwasserkreislauf. Dies bedeutet, dass die Verbindungsleitung eine Art Bypass bildet, die die Vorrichtung umgeht. Die Vorrichtung und die Messeinrichtung können so baulich voneinander getrennt ausgeführt werden und müssen nicht konstruktiv aufeinander angepasst sein. Ferner bietet diese Ausführungsvariante eine größtmögliche Flexibilität für die Anordnung und Verlegung der die Verbindungsleitung und die beiden Warmwasserkreisläufe bildende Verrohrung einschließlich der Verbindung derselben mit der Vorrichtung. Ein weiterer Vorteil besteht darin, dass die Vorrichtung konstruktiv einfach gehalten sein kann und die Anordnung in Modulbauweise realisiert werden kann. So benötigt sie lediglich einen Zulauf und einen Ablauf jeweils für den primären und den sekundären Warmwasserkreislauf. Weitere Anschlüsse sind nicht erforderlich.

Gemäß einer anderen Ausführungsvariante kann die Verbindungsleitung zwischen dem sekundären Warmwasserkreislauf und einem vom aufgeheizten Wasser durchströmbaren Raumbereich der Vorrichtung liegen. Dies bedeutet, dass die Vorrichtung auf Seiten des primären Warmwasserkreislaufs drei Anschlüsse aufweist, nämlich einen Zulauf und zwei Abläufe. Der Zulauf dient dem Anschluss der Vorlaufleitung des primären Warmwasserkreislaufs, einer der Abläufe dem Anschluss der Rücklaufleitung des primären Warmwasserkreislaufs und der zweite Ablauf dem Anschluss der Verbindungsleitung oder ggf. direkt der Messeinrichtung. Der Verzweigungspunkt, an dem das Warmwasser sich vom primären Warmwasserkreislauf zum sekundären Warmwasserkreislauf auftrennt, liegt somit innerhalb der Vorrichtung.

Alternativ oder zusätzlich kann die Verbindungsleitung zwischen dem primären Warmwasserkreislauf und einem vom aufgeheizten Wasserstrom durchströmbaren Raumbereich der Vorrichtung liegen. Wie zuvor erläutert, bedeutet dies, dass die Vorrichtung auf Seiten des sekundären Warmwasserkreislaufs drei Anschlüsse aufweist, nämlich zwei Zuläufe und einen Ablauf. Einer der Zuläufe dient dem Anschluss der Rücklaufleitung des sekundären Warmwasserkreislaufs, der andere Zulauf dient dem Anschluss der Verbindungsleitung oder direkt der Messeinrichtung, und der Ablauf dient dem Anschluss der Vorlaufleitung des sekundären Warmwasserkreislaufs. Der Mündungspunkt, an dem das Warmwasser vom primären Warmwasserkreislauf in den sekundären Warmwasserkreislauf eintritt, liegt somit innerhalb der Vorrichtung.

Die Kombination der beiden beschriebenen Weiterbildungen ergibt, dass gemäß einer Ausführungsvariante die Verbindungsleitung zwischen einem vom aufgeheizten Wasserstrom durchströmbaren ersten Raumbereich innerhalb der Vorrichtung und einem vom aufzuheizenden Wasserstrom durchströmbaren zweiten Raumbereich innerhalb der Vorrichtung liegen kann. In diesem Fall kann die Verbindungsleitung einschließlich Messeinrichtung innerhalb der Vorrichtung angeordnet sein und somit mitsamt der Vorrichtung eine kompakte bauliche Einheit bilden. Dies hat den Vorteil, dass die Verbindungsleitungen nicht gesondert montiert werden muss. Der Montageaufwand für die Realisierung der Anordnung am Ort einer Entnahmestelle vereinfacht sich somit.

Zum Antreiben des aufgeheizten Warmwasserstroms kann in dem primären Warmwasserkreislauf wenigstens eine zentrale Zirkulationspumpe angeordnet sein. Diese zentrale Zirkulationspumpe kann gegebenenfalls auch den an der Zapfstelle erforderlichen Druck bereitstellen oder zumindest erhöhen. In entsprechender Weise kann alternativ oder zusätzlich zum Antreiben des aufzuheizenden Wasserstroms in dem sekundären Warmwasserkreislauf wenigstens eine lokale Zirkulationspumpe angeordnet sein. Diese lokale Zirkulationspumpe kann bezüglich ihrer Leistung kleiner ausgeführt sein als die zentrale Zirkulationspumpe, da sie zum einen nicht zum Aufbau des an der Zapfstelle notwendigen Entnahmedrucks beteiligt ist und zum anderen der Leitungsweg des von dem sekundären Warmwasserkreislauf gebildeten Rings erheblich kleiner ist als der Leitungsweg des von dem primären Warmwasserkreislauf gebildeten Rings.

Vorzugsweise liegt die Verbindungsleitung seitens des primären Warmwasserkreislaufs in Strömungsrichtung hinter der Vorrichtung oder zumindest hinter dem ersten Raumbereich. Dies hat den Vorteil, dass die Vorrichtung auch während einer Entnahme an der Zapfstelle primärseitig durchströmt und damit thermische Energie auf dem sekundären Warmwasserkreislauf übertragen wird. Der im primären Warmwasserkreislauf zirkulierende Wasserstrom passiert somit zunächst die Vorrichtung und tritt erst dann in die Verbindungsleitung ein, um zum sekundären Warmwasserkreislauf respektive zur Zapfstelle zu fließen.

Alternativ kann die Verbindungsleitung seitens des primären Warmwasserkreislaufs in Strömungsrichtung vor der Vorrichtung, d.h. vor dem ersten Raumbereich liegen, wobei die zentrale Zirkulationspumpe hinter der Vorrichtung angeordnet ist. Bei dieser Anordnung erfolgt die Entnahme vom primären Warmwasserkreislauf nicht nach sondern vor der Vorrichtung. Darunter leidet die Wärmeübertragung nur im Zapfbetrieb. Es kann aber davon ausgegangen werden, dass der Zapfmassestrom erheblich größer ist als der Zirkulationsmassestrom, so dass eine Wärmeübertragung in dieser Zeit nicht erforderlich ist. Gleichwohl hat die Anordnung der zentralen Zirkulationspumpe hinter der Vorrichtung den Vorteil, dass die zentrale Zirkulationspumpe nicht wird von den in der Regel erheblich höheren Zapfmasseströmen durchströmt wird. Dies ist vor allem dann der Fall, wenn der Zapfmassestrom nicht von der Zirkulationspumpe zur Zapfstelle bewegt wird, sondern vom Leitungsdruck aus der Trinkwasserversorgung.

Zusätzlich oder alternativ kann die Verbindungsleitung seitens des sekundären Warmwasserkreislaufs in Strömungsrichtung hinter der Vorrichtung oder zumindest hinter dem zweiten Raumbereich liegen. Dies hat den Vorteil, dass das an der Zapfstelle entnommene Wasser nicht erst die Vorrichtung sekundärseitig durchströmen muss, um zur Zapfstelle zu gelangen. Über die Verbindungsleitung ist somit der kürzeste Weg zwischen dem primären und dem sekundären Warmwasserkreislauf realisiert.

Von Vorteil ist es, wenn die Verbindungsleitung seitens des sekundären Warmwasserkreislaufs in den Strömungsweg von der lokalen Zirkulationspumpe zur Zapfstelle mündet. Als Strömungsweg ist hier der Leitungsabschnitt gemeint, der sich in Strömungsrichtung des aufzuheizenden Warmwassers von der lokalen Zirkulationspumpe zur Zapfstelle erstreckt. Hierdurch wird erreicht, dass die lokale Zirkulationspumpe nicht im Strömungsweg des im Falle einer Entnahme an der Zapfstelle vom primären Warmwasserkreislauf zur Zapfstelle strömenden Wassers liegt, d.h. strömungstechnisch "im Weg" ist. Denn in diesem Fall würde die lokale Zirkulationspumpe ein Strömungshindernis bilden und einen Druckabfall an der Zapfstelle bewirken.

Gemäß einer bevorzugten Ausführungsvariante ist die Anordnung derart eingerichtet, dass die lokale Zirkulationspumpe abgeschaltet wird, wenn an der Zapfstelle Wasser entnommen wird. Dies trägt zur Reduzierung des Energieverbrauchs der lokalen Zirkulationspumpe bei, insbesondere wenn für längere Zeit an der Zapfstelle Wasser entnommen wird, wie dies beispielsweise der Fall ist, wenn es sich bei der Zapfstelle um eine Dusche oder Badewanne handelt. Zusätzlich oder alternativ kann die Anordnung derart eingerichtet sein, dass die lokale Zirkulationspumpe abgeschaltet wird, wenn die Temperatur an einer Stelle im primären Warnwasserzirkulationskreis unter einen bestimmten Grenzwert fällt. Beispielsweise kann hier die Temperatur in der Vorrichtung verwendet werden, so dass die genannte Stelle der erste Raumbereich ist, in der die Temperatur vorzugsweis gemessen wird. Auch dies trägt zur Reduzierung des Energieverbrauchs der lokalen Zirkulationspumpe bei. Ist die zentrale Pumpe beispielsweise nachts aus, so kühlt zunächst der zentrale Kreislauf ab. Aufgrund der gesunkenen Temperatur im Zirkulationstrenner kann dann auch die lokale Pumpe abgeschaltet werden. Demenentsprechend kann die Abschaltung der lokalen Zirkulationspumpe dann erfolgen, wenn die zentrale Zirkulationspumpe abgeschaltet wird oder abgeschaltet ist.

Zum Abschalten der lokalen Zirkulationspumpe kann eine Steuerungseinheit vorgesehen sein, die eine Information über die Wasserentnahme an der Zapfstelle, die Temperatur im primären Warmwasserkreislauf, insbesondere in der Vorrichtung, und/ oder über den Einschaltzustand der zentrale Pumpe erhält. Diese Information kann beispielsweise durch einen entsprechenden Sensor geliefert werden. Beispielsweise kann ein Volumenstromsensor verwendet werden, der beispielsweise in die Zapfstelle, in die Messeinrichtung oder in die Verbindungsleitung integriert oder dort angeordnet. Ferner kann ein Temperatursensor für den primären Warmwasserkreislauf, insbesondere für die Vorrichtung verwendet werden, der dort angeordnet oder integriert ist. Schließlich kann ein Stromsensor verwendet werden, der die Stromaufnahme und damit den Betriebszustand der zentralen Pumpe erfasst, wobei allerdings moderne Pumpenaggregate eine Elektronik aufweisen, die den Betriebszustand ohnehin erfassen und regeln, und ein betriebszustandsabhängiges Steuersignal ausgeben können, welches dann zur Steuerung der lokalen Pumpe verwendet werden kann.

Es ist des Weiteren von Vorteil, wenn der sekundäre Warmwasserkreislauf zumindest in dem in Strömungsrichtung liegenden Bereich zwischen der Verbindungsleitung und der Zapfstelle eine Rohrleitung mit größerem Strömungsquerschnitt aufweist, als in den restlichen Bereichen des sekundären Warmwasserkreislaufs. Dies trägt dem Umstand Rechnung, dass der Zapfmassestrom erheblich größer sein kann, als der Zirkulationsmassestrom im Sekundärkreis. Je kleiner der Strömungsquerschnitt einer Rohrleitung ist, umso größer ist ihr hydraulischer Widerstand und damit umso höher der Druckverlust über diese Rohrleitung.

Da an der Entnahmestelle ein ausreichender Druck, z.B. zum Duschen, vorhanden sein muss, zur Realisierung einer zirkulierenden Strömung im sekundären Warmwasserkreislauf jedoch nur ein vergleichsweise kleiner Druck von der lokalen Zirkulationspumpe aufgebaut werden muss, was nur ein vergleichsweise kleinen Strömungsquerschnitt erfordert, ist es zweckmäßig, denjenigen Teil des sekundären Warmwasserkreislaufs mit einem größeren Strömungsquerschnitt auszustatten, über den das vom primären Warmwasserkreislauf stammende Warmwasser strömt, damit kein unnötiger Druckverlust über diesen Abschnitt vorliegt.

Vorzugsweise kann dieser Strömungsquerschnitt im Bereich zwischen der Verbindungsleitung und der Zapfstelle identisch dem Strömungsquerschnitt der Rohrleitungen im primären Warmwasserkreislauf sein. Insbesondere kann auch die Verbindungsleitung diesen Strömungsquerschnitt aufweisen.

Die Erfindung betrifft des Weiteren einen Warmwasserzirkulationstrenner, der als Vorrichtung in der erfindungsgemäßen Anordnung vorgesehen ist.

Es wird daher erfindungsgemäß ein Warmwasserzirkulationstrenner für ein Warmwasserversorgungssystem zur Trennung eines wenigstens eine Zapfstelle aufweisenden sekundären Warmwasserkreislaufs von einem wenigstens eine Heizquelle aufweisenden primären Warmwasserkreislauf vorgeschlagen, der eine primäre Anschlussseite aufweist, die einen ersten Zulaufanschluss zum bestimmungsgemäßen Anschließen einer Vorlaufleitung des primären Warmwasserkreislaufs und wenigstens einen ersten Ablaufanschluss zum bestimmungsgemäßen Anschließen einer Rücklaufleitung des primären Warmwasserkreislaufs aufweist, wobei zwischen dem ersten Zulaufanschluss und dem ersten Ablaufanschluss ein von aufgeheiztem Wasser durchströmbarer erster Raumbereich vorliegt, wobei der Warmwasserzirkulationstrenner des Weiteren eine sekundäre Anschlussseite aufweist, die wenigstens einen zweiten Zulaufanschluss zum bestimmungsgemäßen Anschließen einer Rücklaufleitung des sekundären Warmwasserkreislaufs und einen zweiten Ablaufanschluss zum bestimmungsgemäßen Anschließen einer Vorlaufleitung des sekundären Warmwasserkreislaufs aufweist, wobei zwischen dem zweiten Zulaufanschluss und dem zweiten Ablaufanschluss ein von aufzuheizendem Wasser durchströmbarer zweiter Raumbereich vorliegt, und der erste und der zweite Raumbereich derart thermisch gekoppelt sind, dass thermische Energie vom aufgeheizten Wasserstrom auf den aufzuheizenden Wasserstrom übertragen wird. Dies erfolgt ohne dass sich die beiden Kreisläufe mischen, jedenfalls sofern an der Zapfstelle keine Wasserentnahme vorliegt.

Vorzugsweise weist die primäre Anschlussseite einen zweiten, in den ersten Raumbereich mündenden Ablaufanschluss auf. Dieser dient bestimmungsgemäß dem Anschließen einer den primären Warmwasserkreislauf mit dem sekundären Warmwasserkreislauf verbindenden Verbindungsleitung, in der eine Messeinrichtung zur Messung der über die Zapfstelle entnommenen Wassermenge angeordnet ist, oder dem bestimmungsgemäßen direkten Anschließen einer derartigen Messeinrichtung. Über diesen zweiten Ablaufanschluss wird Wasser aus dem primären Warmwasserkreislauf zur Verfügung gestellt, und kann über die genannte Verbindungsleitung in den sekundären Warmwasserkreislauf eingespeist werden, so dass im Falle eines Öffnens der Zapfstelle Wasser vom primären Warmwasserkreislauf in den sekundären Warmwasserkreislauf und entsprechend zur Zapfstelle fließen kann.

Nach einer bevorzugten Ausführungsvariante weist der Warmwasserzirkulationstrenner eine Zirkulationspumpe zum Antreiben des aufzuheizenden Wasserstroms im sekundären Warmwasserkreislauf auf, die vorzugsweise zwischen dem zweiten Zulaufanschluss und dem zweiten Ablaufanschluss angeordnet ist. Durch diese Komponentenintegration wird eine kompakte Vorrichtung erhalten, die die zusätzliche Montage einer Zirkulationspumpe entbehrlich macht, so dass der Installationsaufwand für die erfindungsgemäße Anordnung verringert wird.

Alternativ oder in Kombination zu der Integration einer Zirkulationspumpe in den Warmwasserzirkulationstrenner kann dieser eine Messeinrichtung zur Messung der über die Zapfstelle entnommenen Wassermenge aufweisen, wobei die Messeinrichtung in einer die primäre Anschlussseite mit der sekundären Anschlussseite verbindenden Verbindungsleitung angeordnet ist. Diese Verbindungsleitung kann z.T. oder gänzlich außerhalb des Zirkulationstrenners verlaufen, bildet mit diesem jedoch gleichwohl eine funktionale Einheit.

Alternativ kann die Verbindungsleitung vollständig innerhalb des Warmwasserzirkulationstrenners verlaufen. Dies kann derart erfolgen, dass die Verbindungsleitung den ersten Raumbereich mit dem zweiten Raumbereich verbindet. Dies bedeutet, dass auch die Messeinrichtung ein integraler Bestandteil des Zirkulationstrenners ist. Dies hat ebenfalls die Reduzierung der Anzahl der zu montierenden Komponenten für die Realisierung der erfindungsgemäßen Anordnung zur Folge. Die Bauteilintegration wird dadurch zusätzlich erhöht und der Zirkulationstrenner noch kompakter ausgeführt.

Um eine gute Wärmeübertragung vom primären Warmwasserkreislauf zum sekundären Warmwasserkreislauf zu erhalten, können der erste und der zweite Raumbereich des Warmwasserzirkulationstrenners durch eine gemeinsame Wand voneinander getrennt sein, die seitens des ersten Raumbereichs oberflächenvergrößernde Mittel aufweist. Bei diesen Mitteln kann es sich beispielsweise um Rippen handeln, die von dem aufgeheizten Wasserstrom des primären Warmwasserkreislaufs umströmt werden.

Weitere Vorteile und Merkmale der Erfindung werden anhand der nachfolgenden Beschreibung von Ausführungsbeispielen und der beigefügten Figuren näher erläutert. Es zeigen:
- Figur 1:: eine erste erfindungsgemäße Anordnung zur Zirkulationstrennung eines zentralen und eines lokalen Warmwasserkreislaufs mit einer Verbindungsleitung als Bypass
- Figur 2:: eine zweite erfindungsgemäße Anordnung zur Zirkulationstrennung eines zentralen und eines lokalen Warmwasserkreislaufs mit einer einseitig am Warmwasserzirkulationstrenner angeschlossenen Verbindungsleitung
- Figur 3:: eine dritte erfindungsgemäße Anordnung zur Zirkulationstrennung eines zentralen und eines lokalen Warmwasserkreislaufs mit einer in den Warmwasserzirkulationstrenner integrierten Verbindungsleitung samt Messeinrichtung
- Figur 4:: eine Parallelschaltung zweier Anordnungen gemäß Figur 1 mit gemeinsamem primären Warmwasserkreislauf
- Figur 5:: einen erfindungsgemäßen Warmwasserzirkulationstrenner

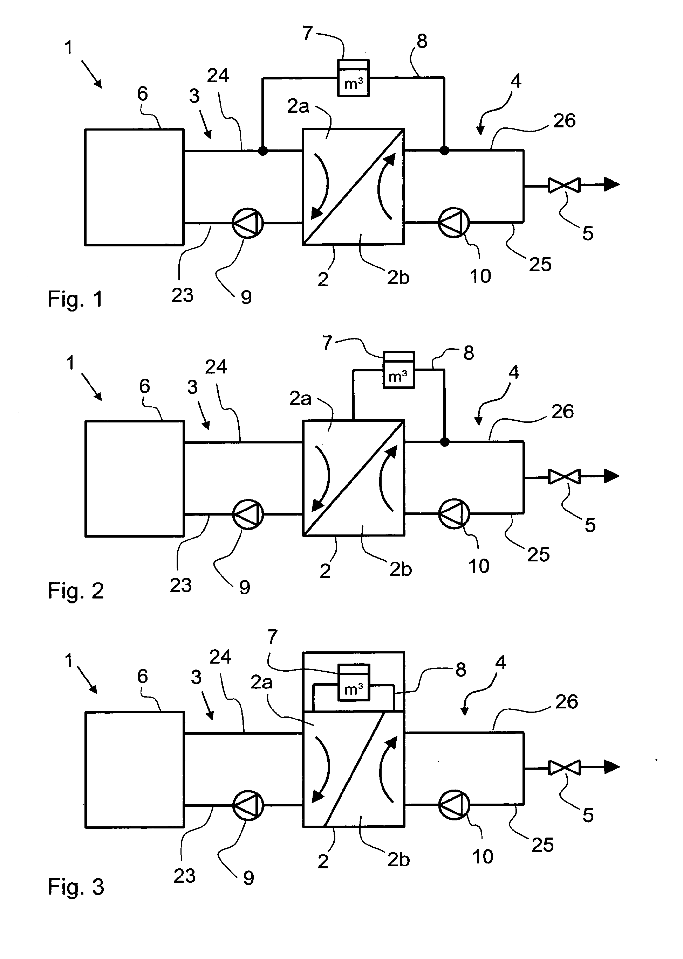

Figur 1 zeigt ein erstes Ausführungsbeispiel einer erfindungsgemäßen Anordnung 1 zur Reduzierung der Verkeimung vor einer Zapfstelle 5 eines häuslichen Warmwasserversorgungssystems. Die Anordnung 1 umfasst einen primären Warmwasserkreislauf 3 zur Förderung eines aufgeheizten Wasserstroms und einen sekundären Warmwasserkreislauf 4 zur Förderung eines aufzuheizenden Wasserstroms. Der primäre Warmwasserkreislauf 3 bildet einen zentralen Kreislauf und umfasst eine Heizquelle 6, die den aufgeheizten Wasserstrom bereitstellt. Hierzu bedient sie sich Trinkwassers, das entweder über eine nicht dargestellte Übergabestelle von einem kommunalen Trinkwasserversorger oder von einem nicht dargestellten Trinkwasserreservoir unter Druck stehend bereitgestellt wird. Der sekundäre Warmwasserkreislauf 4 weist zumindest eine Zapfstelle 5 zur Entnahme von Wasser auf.

Die Anordnung 1 weist ferner eine Vorrichtung 2 auf, die den primären Warmwasserkreislauf 3 und den sekundären Warmwasserkreislauf 4 thermisch miteinander koppelt, wobei thermische Energie vom aufgeheizten Wasserstrom auf den aufzuheizenden Wasserstrom übertragen wird. Die Vorrichtung wirkt in dieser Anordnung wie ein Gegenstromwärmetauscher, wobei auch ein Parallelstromwärmetauscher (Gleichstromwärmetauscher) verwendet werden kann.

Dabei ist eine Vorlaufleitung 24 des primären Warmwasserkreislaufs 3 mit einer primären Anschlussseite der Vorrichtung 2 verbunden. Eine Rücklaufleitung 23 des primären Warmwasserkreislaufs 3 verläuft ferner von der Vorrichtung 2 zurück zur Heizquelle 6. Eine zentrale Zirkulationspumpe 9 ist in der Rücklaufleitung 23 des primären Warmwasserkreislaufs 3 angeordnet, so dass sie von den erheblich höheren Zapfmasseströmen nicht durchströmt wird. Der Zapfmassestrom wird hier nicht von der Zirkulationspumpe zur Zapfstelle bewegt sondern vom Leitungsdruck aus der Wasserversorgung.

In entsprechender Weise weist der sekundäre Warmwasserkreislauf 4 eine lokale Vorlaufleitung 26 auf, die sich von einer sekundärseitigen Anschlussseite der Vorrichtung 2 zu der Zapfstelle 5 erstreckt, und eine lokale Rücklaufleitung 25 auf, die sich von einer Zapfstelle 5 zur sekundären Anschlussseite der Vorrichtung 2 erstreckt. In der lokalen Rücklaufleitung 25 ist eine lokale Zirkulationspumpe 10 angeordnet, die die Wasserströmung im sekundären Warmwasserkreislauf 4 antreibt.

Das an der Zapfstelle 5 entnehmbare Wasser wird über eine Verbindungsleitung 8 aus dem primären Warmwasserkreislauf 3 zur Verfügung gestellt, wobei diese Verbindungsleitung 8 den primären Warmwasserkreislauf 3 mit dem sekundären Warmwasserkreislauf 4 verbindet. In dieser Verbindungsleitung 8 befindet sich eine Messeinrichtung 7 in Gestalt eines Wasserzählers. Wird die Zapfstelle 5 geöffnet, so fließt warmes Wasser aus dem primären Warmwasserkreislauf 3 über die Verbindungsleitung 8 und den Wasserzähler 7 in den sekundären Warmwasserkreislauf 4 zur Zapfstelle 5.

Gegenüber dem Stand der Technik, der lediglich einen einzigen Warmwasserkreislauf vorsieht, von dem eine Stichleitung mit einem Wasserzähler zur Zapfstelle abgeht, weist die erfindungsgemäße Anordnung einen zweiten Kreislauf auf, an dem die Zapfstelle 5 angeschlossen ist und der im geschlossenen Zustand der Zapfstelle 5 vom zentralen Kreislauf 3 stofflich getrennt ist, d.h. dass es keine Mischung der Wasserströme gibt. Durch die erfindungsgemäße Vorrichtung 2 wird einerseits die im zentralen Warmwasserkreislauf 3 vorhandene Wärmeenergie genutzt, um den zweiten Kreislauf 4, d.h. den lokalen Warmwasserkreislauf 4 aufzuheizen. Zusätzlich ist die Messeinrichtung 7 in einen die beiden Kreisläufe 3, 4 verbindenden Zweig 8 verlegt, so dass kein zirkulierendes Wasser sondern nur das im Fall einer Entnahme vom zentralen Warmwasserkreislauf 3 zur Zapfstelle 5 fließende Wasser gezählt wird.

Im Falle der ersten Ausführungsvariante ist die Verbindungsleitung 8 eine Art Bypass, der die Vorrichtung 2 umgeht, da die Verbindungsleitung 8 den primären Warmwasserkreislauf 3 außerhalb der Vorrichtung 2 mit dem sekundären Warmwasserkreislauf 4 verbindet. Seitens des primären Warmwasserkreislaufs 3 ist die Verbindungsleitung 8 in Strömungsrichtung vor der Vorrichtung 2 an den primären Warmwasserkreislaufs 3 angeschlossen, so dass das gezapfte Wasser primärseitig nicht durch die Vorrichtung 2 fließt. Der Strömungsquerschnitt der primärseitigen Rohrleitungen für den Massenstrom hinter dem Abzweig zur Verbindungsleitung kann dadurch erheblich kleiner ausfallen, als vor dem Abzweig zur Verbindungsleitung, da sie nicht den gezapften sondern lediglich den zirkulierenden Massestrom transportieren müssen.

Seitens des sekundären Warmwasserkreislaufs 4 ist die Verbindungsleitung 8 in Strömungsrichtung zwischen der Vorrichtung 2 und der Zapfstelle 5 angeschlossen, so dass das gezapfte Wasser nicht sekundärseitig durch die Vorrichtung 2 fließt. Ferner ist die lokale Zirkulationspumpe 10 nicht in dem Rohrleitungsabschnitt des Vorlaufs 26 zwischen Verbindungsleitung 8 und Zapfstelle 5, sondern in der Rücklaufleitung 25 zwischen Zapfstelle 5 und Vorrichtung 2 angeordnet, um kein Strömungshindernis für das gezapfte Wasser zu sein, um damit nicht zu einer Druckminderung beizutragen.

Figur 2 zeigt eine zweite Ausführungsvariante einer erfindungsgemäßen Anordnung 1, die sich von der ersten Variante lediglich darin unterscheidet, dass die Verbindungsleitung 8 seitens des primären Warmwasserkreislaufs 3 an die Vorrichtung 2 angeschlossen ist. Hier liegt die Verbindungsleitung 8 zwischen dem sekundären Warmwasserkreislauf 4 und einem vom aufgeheizten Wasserstrom durchströmbaren ersten Raumbereich 2a innerhalb der Vorrichtung 2. Somit wird das zur Zapfstelle 5 strömende Wasser direkt aus der Vorrichtung, respektive dem ersten Raumbereich 2a entnommen.

Figur 3 zeigt eine dritte Ausführungsvariante einer erfindungsgemäßen Anordnung 1, die sich von der ersten und zweiten Variante zusätzlich darin unterscheidet, dass auch die Verbindungsleitung seitens des sekundären Warmwasserkreislaufs 4 an die Vorrichtung 2 angeschlossen ist. Hier liegt die Verbindungsleitung 8 zwischen dem ersten Raumbereich 2a und einem vom aufzuheizenden Wasserstrom durchströmbaren zweiten Raumbereich 2b. Zusätzlich ist das schematisch dargestellte Gehäuse der Vorrichtung 2 um die Verbindungsleitung 8 und die Messeinrichtung 7 gezogen, was die Integration der Messeinrichtung 7 in die Vorrichtung veranschaulicht.

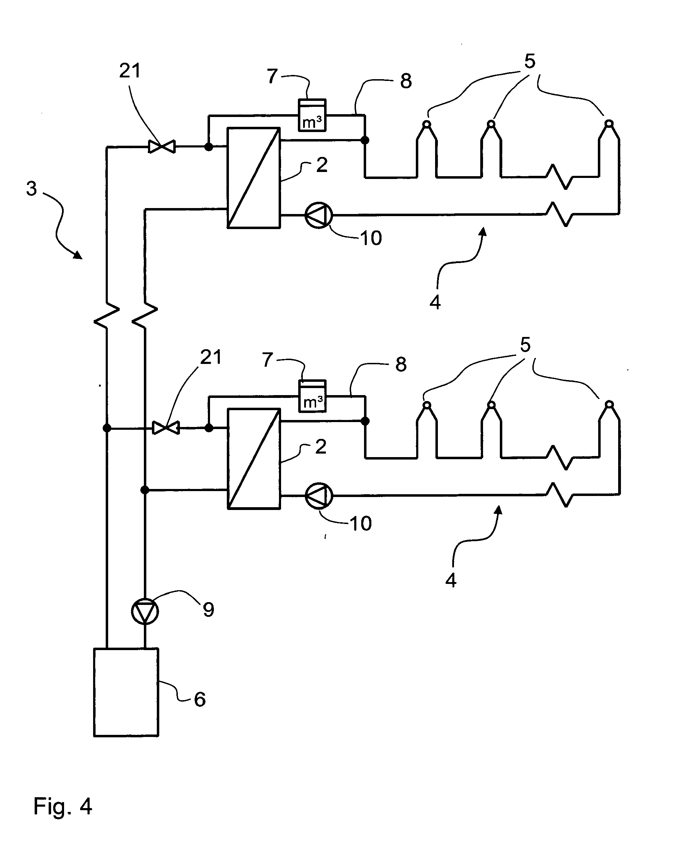

Figur 4 zeigt einen zentralen Warmwasserkreislauf 3, an den parallel zwei sekundäre Warmwasserkreisläufe angeschlossen und jeweils mittels einer Vorrichtung 2 thermisch gekoppelt sind. Ventile 21 in den beiden Vorläufen zu den Vorrichtungen 2 ermöglichen einen hydraulischen Abgleich der beiden primären Warmwasserkreisläufe 3. Auf Seiten der beiden sekundären Warmwasserkreisläufe 4 sind jeweils beispielhaft drei in Reihe liegende Zapfstellen 5 dargestellt, die alle durch das zirkulierende Wasser durchströmt werden.

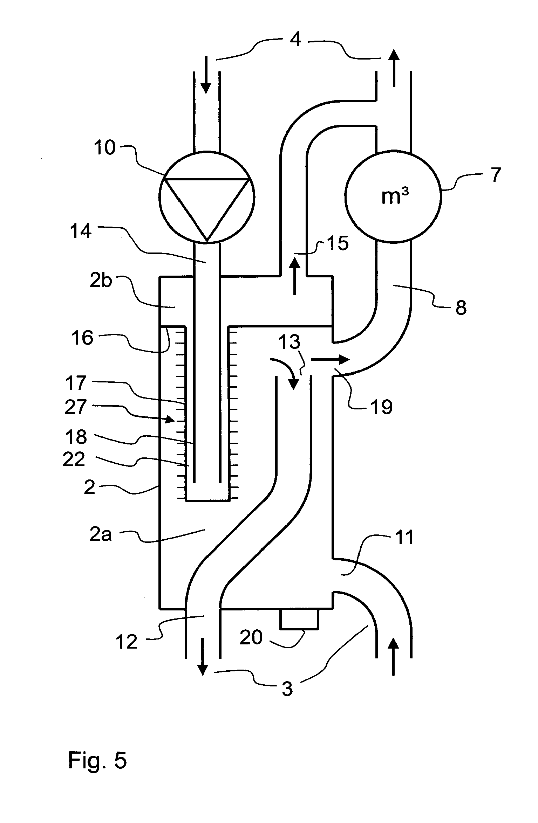

In Figur 5 ist ein Warmwasserzirkulationstrenner dargestellt, der als Vorrichtung 2 in der Anordnung 1 der Figur 2 verwendet werden kann.

Dieser Warmwasserzirkulationstrenner 2 besitzt eine primären Anschlussseite 11, 12, 19, und eine sekundäre Anschlussseite 14, 15. Die primäre Anschlussseite 11, 12, 19 weist einen ersten Zulaufanschluss 11 zum bestimmungsgemäßen Anschließen der Vorlaufleitung 24 des primären Warmwasserkreisaufs 3, einen ersten Ablaufanschluss 12 zum bestimmungsgemäßen Anschließen der Rücklaufleitung 23 des primären Warmwasserkreisaufs 3 und einen zweiten Ablaufanschluss 19 zum bestimmungsgemäßen Anschließen der Verbindungsleitung 8 oder direkt der Messeinrichtung 7 auf, wobei zwischen dem ersten Zulaufanschluss 11 und dem ersten Ablaufanschluss 12 ein von aufgeheiztem Wasser durchströmbarer erster Raumbereich 2a vorliegt. Die sekundäre Anschlussseite 14, 15 weist einen zweiten Zulaufanschluss 14 zum bestimmungsgemäßen Anschließen der Rücklaufleitung 25 des sekundären Warmwasserkreisaufs 4 und einen zweiten Ablaufanschluss 15 zum bestimmungsgemäßen Anschließen der Vorlaufleitung 26 des sekundären Warmwasserkreisaufs 4 auf, wobei zwischen dem zweiten Zulaufanschluss 14 und dem zweiten Ablaufanschluss 15 ein von aufzuheizendem Wasser durchströmbarer zweiter Raumbereich 2b vorliegt. Der erste und der zweite Raumbereich 2a, 2b derart thermisch gekoppelt sind, dass thermische Energie vom aufgeheizten Wasserstrom auf den aufzuheizenden Wasserstrom übertragen wird.

Der Strömungsverlauf ist in Figur 5 durch entsprechende Pfeile veranschaulicht. Der Warmwasserzirkulationstrenner 2 weist eine im Wesentlichen längliche Form auf, wobei an einem Axialende die Anschlüsse 11, 12 für den primären Warmwasserkreislauf 3 und am anderen Axialende die Anschlüsse 14, 15 für den sekundären Warmwasserkreislauf 4 angeordnet sind. Aufgeheiztes Wasser tritt über den ersten Zulaufanschluss 11 am einen Axialende, hier beispielhaft von der Seite, in den ersten Raumbereich 2a hinein und durchströmt diesen. Der erste Ablaufanschluss 12 am einen Axialende ist durch eine offene Seite eines Rohrstücks gebildet, dessen anderes offene Ende 13 sich im Wesentlichen axial in den hinteren Bereich des ersten Raumbereichs 2a erstreckt, so dass ein möglichst großer Abstand zwischen dem Eintrittsort des aufgeheizten Wasserstroms und dem Austrittsort desselben vorliegt. Im hinteren Bereich des ersten Raumbereichs 2a ist zudem der andere Ablaufanschluss 19 vorgesehen, bei dem die Verbindungsleitung 8 seitlich des Warmwasserzirkulationstrenner 2 abgeht. An dem einen Axialende des Warmwasserzirkulationstrenner 2 ist zudem eine Muffe vorhanden, die einen Zugang zum ersten Raumbereich ermöglicht, beispielsweise um einen Temperaturfühler im ersten Raumbereich anzuordnen.

Der Warmwasserzirkulationstrenner 2 weist am anderen Axialende den zweiten Raumbereich 2b auf. Vom zweiten Zulaufanschluss 14 erstreckt sich ein endseitig offenes Rohr18 in den zweiten Raumbereich 2b hinein. Dieses erste Rohr 18 ist von einem zweiten, endseitig geschlossenem zweiten Rohr 17 umgeben, dessen Außenmantelfläche den ersten Raumbereich 2a begrenzt. Zwischen dem ersten und dem zweiten Rohr ist Ringraum 22 gebildet. Vom zweiten Zulaufanschluss 14 einströmendes Wasser des sekundären Warmwasserkreislaufs 3 fließt zunächst durch das erste Rohr 18, tritt an dessen offenem Ende aus und strömt dann durch den Ringraum 22 in axialer Richtung zurück und mündet schließlich in den zweiten Raumbereich 2b. Von diesem zweiten Raumbereich 2b fließt es sodann durch den zweiten Ablaufanschluss 15 am anderen Axialende aus dem Warmwasserzirkulationstrenner 2 hinaus.

Der erste und der zweite Raumbereich 2a, 2b sind durch eine gemeinsame Wand voneinander getrennt, die aus einem scheibenförmigen Teil 16 und dem zweiten Rohr 17 gebildet ist. Seitens des ersten Raumbereichs 2a sind an dem zweiten Rohr 17 oberflächenvergrößernde Mittel 27 in Gestalt von Rippen 27 vorgesehen, die die Wärmeaufnahme verbessern.

An den zweiten Zulaufanschluss 14 der Sekundärseite ist die lokale Zirkulationspumpe 10 angeschlossen, während an dem anderen Ablaufanschluss 19 der Primärseite die Verbindungsleitung 8 mit der Messeinrichtung 7 angeschlossen ist. In Strömungsrichtung hinter der Messeinrichtung 7 münden die Verbindungsleitung 8 und die am zweiten Ablaufanschluss 15 angeschlossene Vorlaufleitung 26 des sekundären Warmwasserkreislaufs 4 ineinander.

Gemäß einer nicht dargestellten Ausführungsvariante können die lokale Zirkulationspumpe 10 und/ oder die Messeinrichtung 7 in den Warmwasserzirkulationstrenner 2 integriert sein und somit Teil derselben sein. Man erhält so ein kompaktes Aggregat, das zum Aufbau einer erfindungsgemäßen Anordnung aufgrund der hohen Integrationsdichte nur einen geringen Montageaufwand erfordert.

### Bezugszeichenliste

- 1: Anordnung für ein Warmwasserversorgungssystems
- 2: Vorrichtung zur thermischen Kopplung
- 2a: erster Raumbereich
- 2b: zweiter Raumbereich
- 3: primärer Wasserkreislauf
- 4: sekundärer Wasserkreislauf
- 5: Zapfstelle
- 6: Heizquelle
- 7: Messeinrichtung
- 8: Verbindungsleitung
- 9: zentrale Zirkulationspumpe
- 10: lokale Zirkulationspumpe
- 11: erster Zulaufanschluss
- 12: erster Ablaufanschluss
- 13: Mündungsöffnung
- 14: zweiter Zulaufanschluss
- 15: zweiter Ablaufanschluss
- 16: Trennwand
- 17: zweites Rohr
- 18: erstes Rohr
- 19: weiterer Ablaufanschluss
- 20: Muffe
- 21: Ventile
- 22: Ringraum
- 23: Rücklaufleitung des primären Warmwasserkreislaufs
- 24: Vorlaufleitung des primären Warmwasserkreislaufs
- 25: Rücklaufleitung des sekundären Warmwasserkreislaufs
- 26: Vorlaufleitung des sekundären Warmwasserkreislaufs

## Patentansprüche

1. Anordnung (1) zur Reduzierung der Verkeimung vor einer Zapfstelle (5) eines Warmwasserversorgungssystems umfassend einen primären Warmwasserkreislauf (3) zur Förderung eines aufgeheizten Wasserstroms zu wenigstens einer Zapfstelle (5) zur Entnahme von Warmwasser, in dem eine Heizquelle (6) zur Bereitstellung des aufgeheizten Wasserstroms vorhanden ist, **gekennzeichnet, durch**
- einen sekundären Warmwasserkreislauf (4) zur Förderung eines aufzuheizenden Wasserstroms, der die zumindest eine Zapfstelle (5) aufweist,
- eine Vorrichtung (2), die den primären Warmwasserkreislauf (3) und den sekundären Warmwasserkreislauf (4) derart thermisch koppelt, dass thermische Energie vom aufgeheizten Wasserstrom auf den aufzuheizenden Wasserstrom übertragen wird, und
- eine Messeinrichtung (7) zur Messung der über die Zapfstelle (5) entnommenen Wassermenge, die in einer den primären Warmwasserkreislauf (3) mit dem sekundären Warmwasserkreislauf (4) verbindenden Verbindungsleitung (8) angeordnet ist.

2. Anordnung (1) nach Anspruch 1, **dadurch gekennzeichnet, dass** der primäre Warmwasserkreislauf (3) ein zentraler Warmwasserkreislauf einer Trinkwasserversorgung ist.

3. Anordnung (1) nach Anspruch 1 oder 2, **dadurch gekennzeichnet, dass** Verbindungsleitung (8) den primären Warmwasserkreislauf (3) außerhalb der Vorrichtung (2) mit dem sekundären Warmwasserkreislauf (4) verbindet.

4. Anordnung (1) nach Anspruch 1 oder 2, **dadurch gekennzeichnet, dass** die Verbindungsleitung (8) zwischen dem sekundären Warmwasserkreislauf (4) und einem vom aufgeheizten Wasserstrom durchströmbaren ersten Raumbereich (2a) innerhalb der Vorrichtung (2) liegt.

5. Anordnung (1) nach Anspruch 1, 2 oder 4, **dadurch gekennzeichnet, dass** die Verbindungsleitung (8) zwischen dem primären Warmwasserkreislauf (4) und einem vom aufzuheizenden Wasserstrom durchströmbaren zweiten Raumbereich (2b) innerhalb der Vorrichtung (2) liegt.

6. Anordnung (1) nach einem der vorherigen Ansprüche, **dadurch gekennzeichnet, dass** die Verbindungleitung (8) seitens des primären Warmwasserkreislaufs (3) in Strömungsrichtung hinter der Vorrichtung (2) oder zumindest hinter dem ersten Raumbereich (2a) liegt.

7. Anordnung (1) nach einem der vorherigen Ansprüche, **dadurch gekennzeichnet, dass** die Verbindungleitung (8) seitens des sekundären Warmwasserkreislaufs (3) in Strömungsrichtung hinter der Vorrichtung (2) oder zumindest hinter dem zweiten Raumbereich (2b) liegt.

8. Anordnung (1) nach einem der vorherigen Ansprüche, **dadurch gekennzeichnet, dass** in dem primären Warmwasserkreislauf (3) wenigstens eine zentrale Zirkulationspumpe (9) zum Antreiben des aufgeheizten Wasserstroms angeordnet ist.

9. Anordnung (1) nach einem der vorherigen Ansprüche, **dadurch gekennzeichnet, dass** in dem sekundären Warmwasserkreislauf (4) wenigstens eine lokale Zirkulationspumpe (10) zum Antreiben des aufzuheizenden Wasserstroms angeordnet ist.

10. Anordnung (1) nach Anspruch 8 und 9, **dadurch gekennzeichnet, dass** die lokale Zirkulationspumpe (10) zumindest in ihrer Leistung kleiner als die zentrale Zirkulationspumpe (9) ausgeführt ist.

11. Anordnung (1) Anspruch 9 oder 10, **dadurch gekennzeichnet, dass** die Verbindungsleitung (8) in den Strömungsweg von der lokalen Zirkulationspumpe (10) zur Zapfstelle (5) mündet.

12. Anordnung (1) nach einem der vorherigen Ansprüche, **dadurch gekennzeichnet, dass** sie eingerichtet ist, die lokale Zirkulationspumpe (10) abzuschalten, wenn an der Zapfstelle (5) Wasser entnommen wird oder wenn die Temperatur an einer Stelle im primären Warmwasserzirkulationskreis (3) unter einen bestimmten Grenzwert fällt.

13. Anordnung (1) nach einem der vorherigen Ansprüche, **dadurch gekennzeichnet, dass** der sekundäre Warmwasserkreislauf (4) in dem in Strömungsrichtung liegenden Bereich zwischen der Verbindungsleitung (8) und der Zapfstelle (5) eine Rohrleitung mit größerem Strömungsquerschnitt aufweist, als in den restlichen Bereichen des sekundären Warmwasserkreislaufs (4).

14. Warmwasserzirkulationstrenner (2) für ein Warmwasserversorgungssystem zur Trennung eines wenigstens eine Zapfstelle (5) aufweisenden sekundären Warmwasserkreislaufs (4) von einem wenigstens eine Heizquelle (6) aufweisenden primären Warmwasserkreisauf (3), mit einer primären Anschlussseite (11, 12, 19), die einen ersten Zulaufanschluss (11) zum bestimmungsgemäßen Anschließen einer Vorlaufleitung (24) des primären Warmwasserkreisaufs (3) und wenigstens einen ersten Ablaufanschluss (12) zum bestimmungsgemäßen Anschließen einer Rücklaufleitung (23) des primären Warmwasserkreisaufs (3) aufweist, wobei zwischen dem ersten Zulaufanschluss (11) und dem ersten Ablaufanschluss (12) ein von aufgeheiztem Wasser durchströmbarer erster Raumbereich (2a) vorliegt, und mit einer sekundären Anschlussseite (14, 15), die wenigstens einen zweiten Zulaufanschluss (14) zum bestimmungsgemäßen Anschließen einer Rücklaufleitung (25) des sekundären Warmwasserkreisaufs (4) und einen zweiten Ablaufanschluss (15) zum bestimmungsgemäßen Anschließen einer Vorlaufleitung (26) des sekundären Warmwasserkreisaufs (4) aufweist, wobei zwischen dem zweiten Zulaufanschluss (14) und dem zweiten Ablaufanschluss (15) ein von aufzuheizendem Wasser durchströmbarer zweiter Raumbereich (2b) vorliegt, **dadurch gekennzeichnet, dass** der erste und der zweite Raumbereich (2a, 2b) derart thermisch gekoppelt sind, dass thermische Energie vom aufgeheizten Wasserstrom auf den aufzuheizenden Wasserstrom übertragen wird.

15. Warmwasserzirkulationstrenner (2) nach Anspruch 14, **dadurch gekennzeichnet, dass** die primäre Anschlussseite (11, 12, 19) einen weiteren in den ersten Raumbereich (2a) mündenden Ablaufanschluss (19) aufweist.

16. Warmwasserzirkulationstrenner (2) nach Anspruch 14 oder 15, **dadurch gekennzeichnet, dass** er eine Zirkulationspumpe (10) zum Antreiben des aufzuheizenden Wasserstroms im sekundären Warmwasserkreislauf (4) zwischen dem zweiten Zulaufanschluss (14) und dem zweiten Ablaufanschluss (15) aufweist.

17. Warmwasserzirkulationstrenner (2) nach einem der Ansprüche 14 bis 16, **dadurch gekennzeichnet, dass** er eine Messeinrichtung (7) zur Messung der über die Zapfstelle (5) entnommenen Wassermenge aufweist, die in einer die primäre Anschlussseite mit der sekundären Anschlussseite, insbesondere in einer den ersten Raumbereich (2a) mit dem zweiten Raumbereich (2b), verbindenden Verbindungsleitung (8) angeordnet ist.

18. Warmwasserzirkulationstrenner (2) nach einem der Ansprüche 14 bis 17, **dadurch gekennzeichnet, dass** der ersten und der zweite Raumbereich (2a, 2b) durch eine gemeinsame Wand (16) voneinander getrennt sind, die seitens des ersten Raumbereichs oberflächenvergrößernde Mittel (27), insbesondere Rippen (27) aufweist.
